# EUROPEAN PATENT SPECIFICATION

(11) **EP 3 944 764 B1**
(45) Date of publication and mention of the grant of the patent: **12.03.2025**
(21) Application number: 20382682.1
(22) Date of filing: 28.07.2020
(51) Int. Cl.: A01G 31/00, A47L 15/00, D06F 39/08, F24C 15/32, A21B 3/04, A47J 31/60

(54) **HOUSEHOLD APPLICANCE AND METHOD FOR OPERATING A HOUSEHOLD APPLIANCE**
HAUSHALTSGERÄT UND VERFAHREN ZUM BETRIEB EINES HAUSHALTSGERÄTES
APPAREIL MÉNAGER ET PROCÉDÉ DE FONCTIONNEMENT ASSOCIÉ

(43) Date of publication of application: 02.02.2022
(73) Proprietor: BSH Hausgeräte GmbH, 81739 München (DE)
(72) Inventor: Borraz, Marina, 50786 Gelsa, Zaragoza (ES); Compais Serrano, Pedro Luis, 50003 Zaragoza (ES); Perez Nicolas, Maria, 50007 Zaragoza (ES); Rojo Esteban, Lander, 50009 Zaragoza (ES)

(56) References cited:
- EP-A1- 1 430 823
- EP-A2- 0 966 914
- WO-A1-2016/146521
- WO-A1-2019/185320
- DE-B3- 102016 124 405

## Description

The invention relates to a household appliance with at least one component, which is supplied with water during operation of the household appliance. The invention further relates to a method for operating such a household appliance.

There are various household appliances, which utilize water during their operation. For example, in a household appliance configured as a steam oven water is heated to produce steam or vapor which is then introduced into an oven chamber of the steam oven. In another household appliance configured for example as a coffee machine, water is heated in order to prepare coffee, and in still other household appliances such as a washing machine or a dishwasher, water is heated for washing purposes. The heating of water in such household appliances or household devices usually leads to the formation of lime or limescale on surfaces of components which are in contact with water during operation of the household appliance.

However, there are also other household appliances with components such as a water tank, a pipe or a pump, which are in contact with water during operation of the household appliance, wherein in these household appliances the water is not heated. Even in such household appliances, in which water is not actively heated during operation, the formation of limescale can occur due to an evaporation of water.

WO 2016 / 146 521 A1 describes a washing machine, which is able to detect limescale. From WO 2019 / 185 320 A1 a method for determining a thickness of a limscale layer is known.

Limescale deposits on or in the respective components of household appliances are unfavorable because of the associated problems such as an at least partial obstruction of pipes or the like, a decrease in heat transfer or a lack of hygiene.

It is possible that a steam oven has an input device enabling a user of the steam oven to enter a water hardness level manually. The water hardness level depends on the hardness of the tap water which is available at a location where the steam oven is operated. The water hardness level entered manually by the user can be taken into account by a control unit of steam oven. And based on the water hardness level entered by the user, the steam oven can then recommend to perform a limescale removal action from time to time. Such a recommendation can depend on the water hardness entered by the user and on incidence of utilization of the steam oven.

However, relying on the water hardness level entered by the user of the household appliance is laborious for the user and is also prone to error.

It is therefore an object of the present invention to provide a household appliance of the initially mentioned kind, which is improved with respect to the handling of limescale deposits, and to indicate a corresponding method for operating a household appliance.

This object is solved by the respective subject-matter of the independent claims. Advantageous configurations with convenient further developments of the invention are specified in the dependent claims and in the description.

The household appliance according to the invention comprises at least one component, which is supplied with water during operation of the household appliance. The household appliance further comprises a detection device configured to detect a presence of limescale on at least one surface of the at least one component. The detection device comprises a first electrode and a second electrode. The detection device further comprises a measuring unit configured to measure a first electrical quantity of the electrodes at at least one frequency of an alternating second electrical quantity applied to the electrodes. The detection device also comprises an evaluation unit configured to determine an impedance of the electrodes based on the measured first electrical quantity. The evaluation unit is further configured to deduce the presence of limescale based on the determined impedance.

This configuration of the detection device is based on the finding that the first electrical quantity of the electrodes which is measured by means of the measuring unit is dependent on the frequency of the alternating second electrical quantity which is applied to the electrodes. Therefore, by measuring the first electrical quantity, the impedance of a system comprising the first electrode and the second electrode can be readily determined by the evaluation unit of the detection device. Of course this configuration of the detection device can be used with devices having more than 2 electrodes. And by determining the impedance, a potential presence of limescale on the at least one surface can be monitored.

Therefore, the presence of limescale on the at least one surface of the at least one component which is in contact with water during operation of the household appliance can be readily and accurately detected by means of the detection device. Consequently, the household appliance is improved with respect to the handling of limescale deposits.

As the household appliance comprises the detection device, there is no need for a user of household appliance to enter a water hardness level into the household device in order to assess when a descaling operating should be performed. This facilitates the operation of the household appliance.

Further, the deposit of limescale can be detected rapidly by means of the detection device. Consequently, an undesirable accumulation of limescale can be avoided. This improves the performance of the household appliance, extends the lifetime of the household appliance and reduces the energy consumption of household appliance due to this lime deposits prevention which improves energy performance. And this is beneficial for a convenient and also efficient use of the household appliance.

Still further, the detection device which relies on impedance measurements, i.e. on the determination of the impedance, is inexpensive and reliable. In addition, the determination of the impedance is a technically mature technology, and the detection device utilizing impedance measurements features a long lifetime.

If the first electrical quantity measured by the measuring unit is an intensity of electrical current, the second electrical quantity applied to the electrodes can be an alternating voltage, i.e. a voltage the amplitude of which changes with a certain frequency. And if the first electrical quantity measured by the measuring unit is a voltage, the alternating second electrical quantity applied to the electrodes can be an electric current the intensity or amplitude of which changes with a certain frequency. Such electrical quantities can be readily measured by means of the measuring unit.

Preferably, the detection device comprises a frequency generator configured to provide a plurality of frequencies of the alternating second electrical quantity. This is based on the finding that a very reliable detection of limescale can be performed if an impedance measurement is not only performed at one single frequency of the second electrical quantity which may be an alternating electrical current or an alternating voltage. Therefore, distinguishing between the presence of limescale and an absence of limescale by means of determining the impedance of the electrodes is more reliable, if the impedance is determined at a plurality of frequencies of the alternating second electrical quantity.

In other words, an impedance spectroscopy can be performed if the frequency generator provides a plurality of frequencies of the alternating second electrical quantity consecutively. And such an impedance spectroscopy yields particularly reliable results with respect to the presence of limescale, in particular with respect to the presence of a quantity of limescale, which is above a certain threshold.

Further, impedance measurements performed at specific frequencies within a given frequency range may exhibit particularly remarkable differences if limescale is present compared to measurements at the same frequencies when no limescale is present. Therefore, by providing these specific frequencies by means of the frequency generator, the presence of limescale can be detected particularly rapidly and reliably.

The electrodes are applied to the at least one surface of the at least one component. By means of such an arrangement of the electrodes, limescale deposits can be detected directly upon their formation. Consequently, remedial actions such as a descaling operation or descaling process can be performed immediately when the limescale starts being deposited in a detectable quantity.

If the electrodes are applied to a surface of the at least one component, the material of which is particularly prone to the formation of limescale, the presence of limescale can be detected in a particularly reliable manner. It is therefore advantageous to arrange the electrodes on a surface of the component, on which the formation of limescale is more likely to happen than on another surface of the component.

Preferably, the detection device is configured to detect the presence of limescale on at least one of the electrodes. This is based on the finding that limescale deposits on at least one of the electrodes has an influence on the impedance determined for a system comprising the limescale deposit and the at least one electrode. Therefore, detecting the presence of limescale on the at least one electrode can be interpreted by the evaluation unit as a presence of limescale on the at least one surface. This information can then be utilized to undertake or recommend a descaling action.

The two electrodes can have a variety of shapes and a variety of arrangements relative to each other. Modifying the geometry and/or the arrangement of the electrodes, in particular with respect to a thickness of the electrodes and/or to a distance between the electrodes can be beneficial for the detection of limescale.

The first electrode and the second electrode each comprise a collector portion and a plurality of fingers extending from the collector portion. Such an arrangement makes it particularly simple to detect limescale deposit on the fingers extending from the collector portion of the first electrode and on the fingers extending from the collector portion of the second electrode.

At least one finger of the first electrode is arranged adjacent to at least one finger of the second electrode. In particular, the fingers of the first electrode can be arranged in an intercalated manner with respect to the fingers of the second electrode. In other words, in a direction which is perpendicular to the fingers, at least one finger of the first electrode can be arranged next to at least one finger of the second electrode. For example, the fingers can be arranged in a manner similar to the teeth of two combs, wherein the teeth are meshing with each other without being in contact with each other.

Such an arrangement of the fingers of the two electrodes provides a netlike substrate on which the deposit of limescale is particularly likely to take place. Therefore, with such an arrangement of fingers of the two electrodes relative to each other the detection of limescale is facilitated.

This is particularly true, if the two collector portions are arc-shaped such that the two arc-shaped collector portions form a ring-like structure. In particular in such a ring-like structure, a distance between one finger of the first electrode and one finger of the second electrode can be in the range of, for example, about 5 µm to about 10 µm, wherein the diameter of the ring-like structure can be around 5 mm. Such an arrangement of the electrodes is particularly easy to integrate into the household appliance.

Preferably, the evaluation unit is configured to deduce the presence of limescale based on a recognition of a pattern of a plurality of values indicating the impedance of the electrodes at one frequency. Such a pattern recognition can be readily performed by an algorithm implemented in the evaluation unit. Therefore, an automatic detection of the presence of limescale can be achieved. In particular, the algorithm can utilize machine learning techniques for the pattern recognition.

The values indicating the impedance at one frequency of the alternating second electrical quantity can comprise a first value representing an impedance module and a second value representing a phase difference between voltage and current. Alternatively to representing the impedance in such a polar form, a Cartesian form for describing the impedance can be employed. In this Cartesian form the impedance comprises a real part in form of the electrical resistance and an imaginary part in form of a reactance.

However, other conventions can be utilized to represent the values indicating the impedance of the electrodes at one frequency. As the evaluation unit is preferably configured to deduce the presence of limescale based on the recognition of the pattern of these values, a very reliable limescale detection can be achieved.

Preferably, the evaluation unit comprises a classifier configured to distinguish between the presence of limescale and an absence of limescale. This makes the detection of limescale particularly simple. The absence of limescale can in particular correspond to a quantity of limescale, which is below a predetermined threshold.

The classifier can perform a linear discriminant analysis (LDA) on the values indicating the impedance. Alternatively, a support vector machine (SVM) can be utilized to classify a sample as sample with limescale or as sample without limescale. Such classification algorithms are readily available and provide a high level of accuracy once they have been trained with an appropriate training data set. However, other classifiers, in particular classifiers utilized in machine learning applications can be implemented in the evaluation unit.

Preferably, the household appliance comprises a warning device configured to inform a user of the household appliance about the presence of limescale on the at least one surface. If the household appliance comprises the warning device, the user can undertake an appropriate descaling action whenever this is deemed useful or advisable by the household appliance. This helps the user in maintaining a high performance of the household appliance during a long lifetime of the household appliance.

Preferably, the household appliance comprises a descaling device configured to perform a descaling process of the at least one surface. This makes it particularly simple for a user of the household appliance to achieve a removal of the limescale deposit on the at least one surface.

The descaling device can in particular be configured to perform the descaling process in dependence on a signal from the detection device. In this configuration, the descaling process is automatically triggered upon the detection of limescale above a predetermined threshold. Consequently, the descaling process can take place automatically once a certain limescale deposit has appeared on the surface, and the user does not even need to trigger the descaling action himself. This makes the operation of the household appliance very convenient for the user of the household appliance.

The descaling device can comprise a tank or receptacle for storing a descaling solution which can then be applied to the at least one surface on which the formation of limescale has occurred. Such a descaling device makes the automatic removal of limescale from the at least one surface particularly easy.

Preferably, the household appliance is configured to heat the water being in contact with the at least one component during operation of the household appliance. This is based on the finding that especially household appliances with at least one heating element for heating the water are particularly prone to the formation of limescale deposit. This is due to the fact that the precipitation of limescale takes place more readily when the water is heated then in cold water.

Therefore, for any household appliance comprising at least one heating element configured to heat the tap water provided to the household appliance, it is particularly useful to be equipped with the detection device.

The household appliance can, for example, be configured as a steam oven. Such a steam oven can comprise a tank and at least one heating element configured to heat the water in the tank such that the water evaporates. The at least one heating element or evaporator can, for example, be in contact with a wall of the tank. The steam or vapor produced by means of the at least one heating element is then introduced into an oven chamber or oven cavity of the steam oven.

In particular, the tank in which the evaporation of water takes place is a component of such a household appliance where the formation of limescale is probable to occur. Consequently, detecting limescale on the surface of such a component is particularly useful.

The household appliance can also be configured as, for example, a coffee machine. In the coffee machine water is heated to a particularly high temperature. This increases the probability for the formation of limescale. Coffee machine components which are prone to limescale deposit can in particular comprise pipes for delivering water but also a water tank or the like. Detecting the limescale on surfaces of such components of the coffee machine by means of the detection device is therefore very useful.

However, the household appliance can also be configured as a washing machine or a dishwasher or the like. Also in such household appliances tap water is usually heated by at least one heating element to elevated temperatures for washing purposes. This goes along with an increased probability for a formation of limescale. And the formation of limescale can readily be detected, if the household appliance comprises the detection device.

However, any component of the household appliance configured as washing machine or dishwasher, which is in contact with water during operation of the household appliance can be affected by limescale deposits. Such components can in particular comprise pipes, pumps, heat exchangers or the like. Therefore, applying the electrodes of the detection device to such components is also useful for these types of household appliances.

Still further, the household appliance can be configured as a home grow device. Such a device usually comprises a water tank for storing water utilized for irrigating seeds and plants that are grown by means of the home grow device. In addition to the tank, a pump of the home grow device, which is utilized for delivering water from the tank to the seeds and plants can be affected by the presence of limescale. Therefore, it is also helpful to equip at least one of such components of the home grow device with the detection device. The home grow device can further comprise a light unit with a plurality of light sources for the plants to be grown.

In the method according to the invention for operating a household appliance, the household appliance comprises at least one component, which is supplied with water during operation of the household appliance. The household appliance - detects a presence of limescale on at least one surface of the at least one component using a detection device, wherein the detection device comprises a first electrode and a second electrode, which are applied to the at least one surface; - measures a first electrical quantity of the electrodes at at least one frequency of an alternating second electrical quantity applied to the electrodes using a measuring unit; and - determines an impedance of the electrodes based on the measured first electrical quantity and deducing the presence of limescale based on the determined impedance using an evaluation unit; wherein in the step of detecting a presence of limescale, a detection device is used, whose first electrode and second electrode each comprise a collector portion and a plurality of fingers extending from the collector portion, wherein at least one finger of the first electrode is arranged adjacent to at least one finger of the second electrode.

Such a method is improved with respect to the handling of limescale deposit. This is due to the fact that upon the detection of limescale on the at least one surface a remedial action such as a descaling process can be initiated.

The advantages and preferred embodiments described with respect to the household appliance according to the invention also apply to the method according to the invention and vice versa.

The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures or explained, but arise from and can be generated by separated feature combinations from the explained implementations. Therefore also embodiments and feature combinations shall be considered as disclosed, which do not have all the features of an originally formulated independent claim. Moreover, implementations and feature combinations are to be considered as disclosed, in particular by the implementations set out above, which extend beyond or deviate from the feature combinations set out in the relations of the claims.

Further advantages, features and details of the invention are apparent from the claims, the following description of preferred embodiments as well as based on the drawings in which features having analogous functions are designated with the same reference signs. Therein show:
- Fig. 1: very schematically a household appliance configured as a steam oven, wherein the steam oven comprises a detection device for detecting the presence of limescale;
- Fig. 2: a possible configuration of two electrodes of the detection device;
- Fig. 3: a graph with patterns of impedance spectroscopy measurements performed by means of the of the detection device on water samples having different degrees of water hardness;
- Fig. 4: a graph with patterns of impedance spectroscopy measurements performed by means of the detection device on a first sample containing limescale compared to a second sample without limescale;
- Fig. 5: schematically steps in data processing during a training phase of a model utilized in the detection device and the utilization of the trained model, wherein the model is configured to distinguish between the presence of limescale and the absence of limescale; and
- Fig. 6: a graphic representation of an output of the model utilized in the detection device, wherein a classifier of the model separates measurements belonging to first a class of samples containing limescale from measurements belonging to a second class of samples without limescale.

The indications "upper", "lower", "top", "front", "bottom", "floor", "horizontal", "vertical", "depth direction", "width direction", "height direction" and the like refer to the positions and orientations of the appliance in its intended use position with respect to an observer located in front of the appliance and regarding towards the appliance.

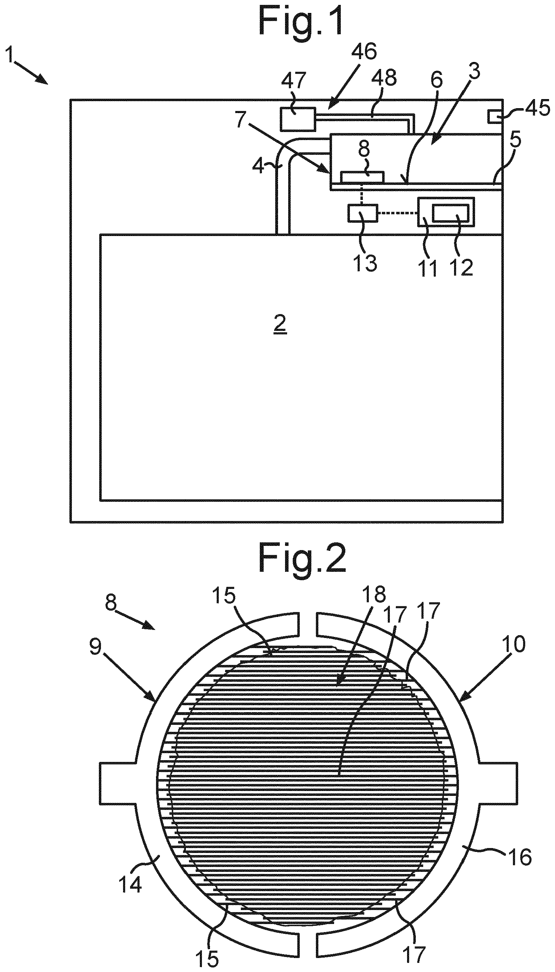

Fig. 1 shows very schematically a household appliance 1 which is configured as a steam oven. This specific example of the household appliance 1 is utilized to illustrate the working principle for the detection of limescale on at least one component of the household appliance 1. However, in other examples the household appliance 1 can be configured as any household device comprising at least one component which is supplied with water during operation of the household appliance 1 such that the component is in contact with water during the operation. Non-limiting examples of such household appliances 1 can comprise a coffee machine, a washing machine, a dishwasher, a home grow device and the like.

The household appliance 1 which is schematically shown in Fig. 1 and which is configured as the steam oven comprises an oven chamber 2 into which vapor is introduced for steam cooking of food. Components of the household appliance 1, which are in contact with water or which are supplied with water during operation of the household appliance 1 comprise, for example, a water tank 3 and a pipe 4 for guiding vapor into the oven chamber 2 or oven cavity. A heating element 5 or evaporator can be in contact with at least one wall of the water tank 3. By means of the heating element 5, vapor or steam can be produced from the water contained in the water tank 3. However, this heating of water can lead to a formation of limescale on at least one surface 6 of such a component, for example on the surface 6 of the least one wall of the water tank 3.

In the schematic representation of the household appliance 1 in Fig. 1, in which the household appliance 1 is shown in a side view, the surface 6 is exemplarily shown as a surface 6 of a bottom wall of the water tank 3. However, in other household appliances 1, and also in the steam oven shown exemplarily in Fig. 1, such a formation of limescale can occur on a variety of other surfaces of components which are in contact with water during operation of the household appliance 1. For example, evaporation of water containing minerals and thus having a certain hardness can lead to the formation of limescale or lime inside the pipe 4.

In the example shown in Fig. 1, the household appliance 1 comprises a detection device 7 which is configured to detect the presence of limescale on, for example, the surface 6. The detection device 7 comprises two electrodes 8 which are only schematically represented in Fig. 1. As can be better seen from Fig. 2, the electrodes 8 comprise a first electrode 9 and a second electrode 10 which are positioned close to each other but electrically separated from each other.

The detection device 7 further comprises a measuring unit 11, which is configured to measure a first electrical quantity of the electrodes 8. For example, the measuring unit 11 can be configured to measure a current intensity if an alternating voltage is applied to the electrodes 8 in form of the first electrode 9 and the second electrode 10. In a like manner, the measuring unit 11 can be configured to measure a voltage across the electrodes 8, if an alternating electrical current is applied to the electrodes 8. The measuring unit 11 can be utilized to apply the alternating second electrical quantity to the electrodes 8, i.e. the alternating voltage and/or the alternating electrical current.

The detection device 7 further comprises an evaluation unit 12 which can, for example, be configured as an integrated circuit or a microprocessor or the like. The evaluation unit 12 is configured to determine an impedance of the electrodes 8 based on the first electrical quantity which is measured by the measuring unit 11. The evaluation unit 12 is further configured to deduce the presence of limescale based on the determined impedance.

In order to apply the alternating second electrical quantity to the electrodes 8, the measuring unit 11 can utilize electrical energy from an external voltage supply (not shown) to which the household appliance 1 is connected. In particular, the household appliance 1 can be connected to an external voltage supply providing a voltage alternating with a given frequency.

It is possible to perform the impedance measurement effected by the detection device 7 at a single frequency of the alternating electrical quantity, for example the alternating voltage. However, a particularly reliable result with regard to the detection of limescale can be obtained, if an impedance spectroscopy is performed by the detection device 7. Therefore, impedance measurements are preferably performed at a plurality of frequencies of the alternating second electrical quantity.

In the example shown in Fig. 1, the household appliance 1 comprises a frequency generator 13 which is connected to the electrodes 8. By means of the frequency generator 13, the alternating second electrical quantity, for example the alternating voltage, can be applied to the electrodes 8 at different frequencies. Herein, each impedance measurement corresponds to a measurement performed at one single frequency of the alternating second electrical quantity.

By performing a plurality of impedance measurements and therefore measuring the first electrical quantity of the electrodes 8 at a corresponding plurality of frequencies of the alternating second electrical quantity, impedance spectroscopy can be performed to study the effect of limescale deposits on the electrodes 8. This shall be illustrated with respect to Fig. 2.

In the configuration of the electrodes 8 shown exemplarily in Fig. 2, the first electrode 9 comprises an arc-shaped collector portion 14 and a plurality of fingers 15 extending from the collector portion 14 of the first electrode 9 towards the second electrode 10. In a like manner, the second electrode 10 comprises an arc-shaped collector portion 16 with a plurality of fingers 17 extending towards the first electrode 9. In Fig. 2 only some of the fingers 15 ,17 are provided with a corresponding reference sign for reasons of simplicity. As can be seen from the schematic representation in Fig. 2 a deposition of limescale 18 can in particular occur in a region of the electrodes 8 or electrode arrangement, in which the fingers 15, 17 are intercalated with one another.

A diameter of the electrode arrangement comprising the arc-shaped portions 14, 16, which form a ring-like structure in the example shown in Fig. 2, can be around 5 mm. And a distance between one finger 15 of the first electrode 9 and one finger 17 of the second electrode 10 can be in a range of about 5 µm to about 1,5 mm, most preferably in a range of about 5 µm to about 1 mm, most preferably in a range of about 5 µm to about 100 µm and most preferably in a range of about 5 µm to about 10 µm. However, other configurations, geometries and dimensions of the first electrode 9 and the second electrode 10 are possible.

As can be seen from Fig. 1 and Fig. 2 the electrodes 8 can be applied to the surface 6 inside the water tank 3 in order to detect the deposit of limescale 18 on this surface 6 and therefore also on the electrodes 8.

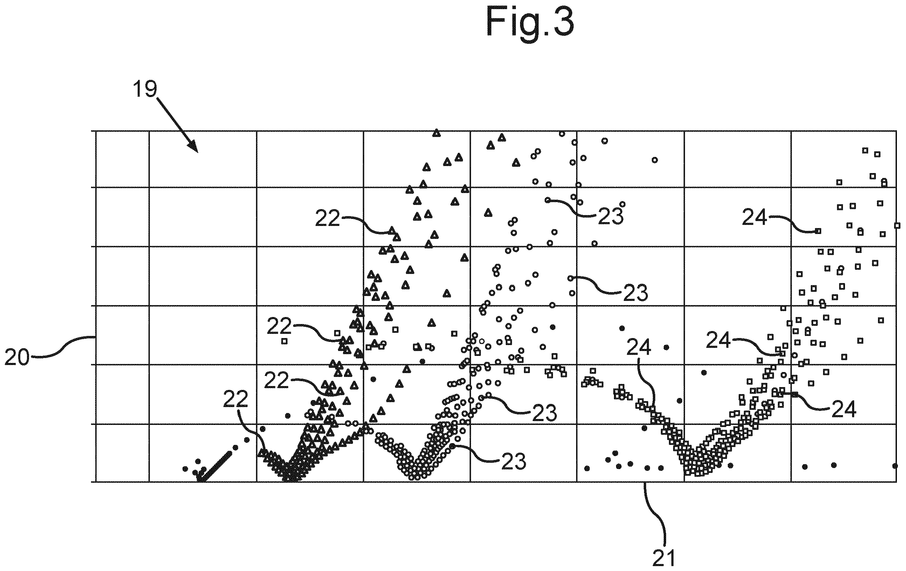

If an impedance measurement is performed, in which, for example, an alternating voltage with a given frequency is applied to the electrodes 8, the dielectric properties of a system or arrangement comprising the electrodes 8 are determined as a function of the frequency. The impedance determined for each one of the frequencies can be represented in a graph 19 as it is shown in Fig. 3. In the graph 19 shown in Fig. 3 an imaginary part of the impedance can be indicated on a vertical axis 20 of the graph 19 whereas a real part of the impedance can be indicated on a horizontal axis 21 of the graph 19.

In the graph 19 shown in Fig. 3, there is a first group of points 22, wherein each point 22 belonging to this first group represents an impedance measurement performed at one frequency of, for example, the voltage applied to the electrodes 8. In the first group of points 22 only some of the points 22 are provided with a reference sign for reasons of simplicity. This first group of points 22 corresponds to an impedance spectroscopy performed with the electrodes 8 in a water sample having a relatively high degree of water hardness.

In a like manner, the graph 19 shows a second group of points 23 with generally higher values for the real part of the impedance determined at a given frequency. Therefore, this second group of points 23 is located further towards higher values of the real part of the impedance which corresponds to the resistance of electrodes 8 or the system comprising the electrodes 8. This is due to the fact that the points 23 belonging to the second group correspond to impedance measurements performed at a plurality of frequencies with a water sample having a lower degree of water hardness.

In the graph 19 shown in Fig. 3, a third group of points 24 represents a third water sample with a still lower degree of water hardness. These points 24 exhibit an even higher resistance or real part of the impedance for a given frequency. In other words, water samples with a higher water hardness and therefore a higher concentration of charge carriers exhibit a lower resistance value and vice versa.

In the example shown in Fig. 3, the water samples having the respective hardness levels were measured using impedance spectroscopy without any deposit of limescale 18 on the electrodes 8. Specifically, the points 24 forming the third group belong to a water sample with a degree of general hardness or German degree of 10°dH. The second group of points 23 belong to a water sample with a water hardness of 20°dH, and the third group of points 22 belongs to a water sample with 30°dH. As can be seen from Fig. 3, the impedance spectroscopy enables to distinguish between these water samples having different degrees of water hardness.

In a like manner as with the no-lime samples represented in Fig. 3, impedance spectroscopy can also be performed on the electrodes 8 with limescale 18 deposited on the electrodes 8 (see Fig. 2). In particular for model calibration purposes, the electrodes 8 can be placed in a synthetic hard water solution for 24 hours at a temperature of 70°C inside an oven or oven chamber such as the oven chamber 2 of the steam oven exemplarily shown in Fig. 1. A fan speed of a fan (not shown) installed inside the oven chamber 2 can be set to 70% of the maximum speed, and an opening enabling air to escape from the oven chamber 2 can be closed by 70%.

After the 24 hours under such experimental conditions the samples can be measured again. As a result a deposit of limescale 18 on the electrodes 8 has taken place. This presence of limescale 18 on the electrodes 8 has an influence on the impedance measurements performed. The results obtained with the experimental conditions detailed above showed that the presence of limescale 18 on the electrodes 8 can be readily detected by utilizing impedance spectroscopy.

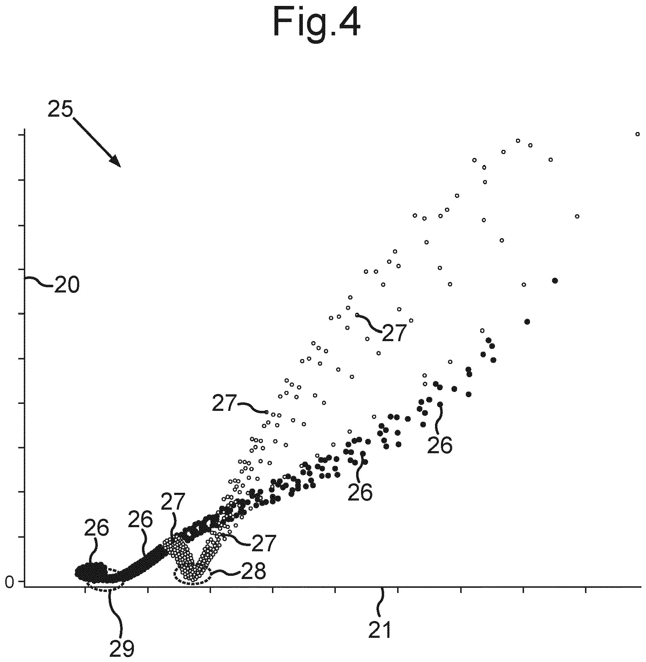

One example, in which impedance spectroscopy was first performed on the electrodes 8 without deposit of limescale 18 and then after the precipitation of limescale 18 on the electrodes 8 is exemplarily shown in a graph 25 in Fig. 4. As in Fig. 3 the vertical axis 20 represents the imaginary part of the impedance determined by the evaluation unit 12 and the horizontal axis 21 represents the real part of the impedance determined by the evaluation unit 12.

Fig. 4 shows a first group of points 26 which corresponds to impedance measurements performed on the electrodes 8 having limescale 18 deposit as it is schematically shown in Fig. 2. A second group of points 27 in Fig. 4 represents the results of the impedance spectroscopy performed when no lime or limescale 18 was present on the electrodes 8. In Fig. 4, each one of the points 26 belonging to the first group represents an impedance measurement performed by means of the measuring unit 11 at one single frequency of the alternating second electrical quantity applied to the electrodes 8. Also, each point 27 belonging to the second group represents an impedance measurement performed at one single frequency.

As can be seen from Fig. 4, the impedance pattern of the first group of points 26 is clearly different from the impedance pattern of the second group of points 27. Therefore, by analyzing the impedance patterns which are represented in the graph 25 of Fig. 4 as the distribution of the points 26 and of the points 27 enables the detection device 7 to distinguish between the presence of limescale 18 and an absence of limescale 18.

The second group of points 27 shown in Fig. 4 comprises a region 28 in which the value of the imaginary part is very low, namely close to zero. This means that this characteristic region 28 represents the real part of the impedance only, in other words the electrical resistance measured by the electrodes 8.

In a like manner, the first group of points 26 comprises a region 29 in which the imaginary part of the impedance is particularly low, i.e. close to zero. Consequently, also the points 26 in this region 29 represent the real part only of the impedance and therefore the resistance of the electrodes 8. These characteristic regions 28, 29 are particularly useful in material characterization by means of impedance spectroscopy. Further, in the example shown in Fig. 4 a remarkable difference between the two groups of points 26, 27 can be observed, in particular by looking at these two characteristic regions 28, 29.

The example shown in Fig. 4 indicates that the sample without limescale, which is represented by the second group of points 27, has a higher resistance for frequencies corresponding to this characteristic region 28. It can therefore be possible to distinguish between electrodes 8 having limescale 18 and electrodes 8 without limescale 18 by evaluating in particular at least one measurement corresponding to the points 26, 27 in the specific regions 28, 29. However, analyzing the complete pattern of the values represented by the first points 26 compared to the values represented by the second points 27 yields a particularly reliable result with respect to the detection of limescale 18.

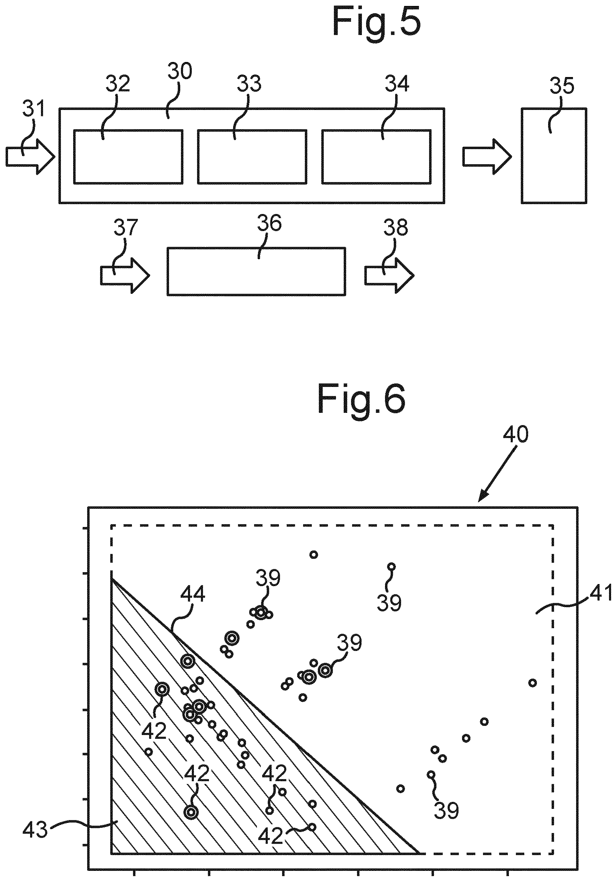

Fig. 5 represents steps in training and in utilizing a classification algorithm or model implemented in the evaluation unit 12 of the household appliance 1. In a model training block 30 a training dataset 31 is first processed in a data processing step 32. This data processing step 32 can comprise a reshaping in order to structure the training data for a correct data processing. In the training dataset 31 the data are labeled. This means that each data point of the training dataset 31 is associated to one class or category. In the training dataset 31 shown in Fig. 5, the labelling comprises indicating whether the sample is a sample with limescale or without limescale.

In a subsequent step, a dimensionality reduction 33 takes place, for example, by applying the principle component analysis (PCA) technique. This dimensionality reduction 33 reduces the number of variables that need to be treated. For example, in order to reduce the number of variables only some of the frequencies or the combination of some of them can be utilized further. Preferably, the frequencies which correspond to impedance measurements, in which the differences between the samples with lime and without lime can particularly well be distinguished from one another, can be retained as a result of the dimensionality reduction 33. The data are then treated by a classifier 34. For this classification step, a linear discriminant analysis (LDA) can be performed. Alternatively, the classification can be done by utilizing a support vector machine (SVM) as the classifier 34.

In a subsequent model validation step 35, the accuracy of the model is analyzed. Once the model is validated, the validated model 36 can be utilized to treat unknown or new data 37 by means of which the presence of limescale or the absence of limescale shall be determined. An output 38 of the validated model 36 is the determination, whether limescale 18 is present on the electrodes 8 (see Fig. 2) and therefore on the surface 6, for example (see Fig. 1). By treating the data 37 shown in Fig. 5 by means of the trained model 36 the presence or absence of limescale 18 can be detected.

The data processing step 32, the step during which the dimensionality reduction 33 is achieved, and the classification performed by the classifier 34 also take place in the validated model 36 which treats the data 37 in order to yield the output 38.

Fig. 6 illustrates an example output 38 obtained by utilizing a support vector machine as the classifier 34. In a graph 40 shown in Fig. 6, a plurality of points 39 are located in a region 41 representing the absence of limescale 18. In the graph 40 shown in Fig. 6 there are also other points 42 which are located in a second region 43. The points 42 located in this second region 43 correspond to samples with limescale 18.

As can be seen from Fig. 6, the support vector machine (SVM) is able to separate the first region 41 from the second region 43 by a separation plane 44. Accordingly, the points 39 representing samples with no lime or limescale 18 are correctly positioned within the first region 41, wherein the points 42 representing samples with lime are correctly positioned within the second region 43. This shows that the detection device 7 reliably detects the presence of limescale 18, for example on the surface 6 of the at least one component of the household appliance 1.

Fig. 1 shows that the household appliance 1 can comprise a warning device 45 by means of which a user of the household appliance 1 can be informed about the presence of limescale 18 on the at least one surface 6. The warning device 45 can be configured as a warning lamp or comprise a warning lamp. Alternatively or additionally the warning device 45 can provide a warning message such as a written message, a spoken message or a symbol indicating that a descaling process should be initiated by the user of the household appliance 1.

As can be further seem from Fig. 1, the household appliance 1 can comprise a descaling device 46. By means of the descaling device 46 a descaling process of the at least one surface 6 can be performed. The descaling device 46 can be triggered automatically when descaling of the at least one surface 6 shall take place.

The descaling device 46 can comprise a receptacle 47 containing a descaling solution or the like. Through a pipe 48 or the like the descaling solution can be supplied to the surface 6 on which the limescale 18 has formed. If the descaling action or descaling process is automatically triggered by the household appliance 1, in particular upon a signal from the detection device 7, this is very convenient for the user of the household appliance 1.

As described above the household appliance 1 comprising the detection device 7 enables the detection of the presence of limescale 18 on the at least one surface 6 by means of an impedance pattern recognition, wherein in particular machine learning techniques can be utilized.

### List of Reference Signs

- 1: household appliance
- 2: oven chamber
- 3: water tank
- 4: pipe
- 5: heating element
- 6: surface
- 7: detection device
- 8: electrodes
- 9: first electrode
- 10: second electrode
- 11: measuring unit
- 12: evaluation unit
- 13: frequency generator
- 14: collector portion
- 15: finger
- 16: collector portion
- 17: finger
- 18: limescale
- 19: graph
- 20: vertical axis
- 21: horizontal axis
- 22: point
- 23: point
- 24: point
- 25: graph
- 26: point
- 27: point
- 28: region
- 29: region
- 30: block
- 31: training dataset
- 32: step
- 33: dimensionality reduction
- 34: classifier
- 35: validation step
- 36: model
- 37: data
- 38: output
- 39: point
- 40: graph
- 41: region
- 42: point
- 43: region
- 44: separation plane
- 45: warning device
- 46: descaling device
- 47: receptacle
- 48: pipe

## Claims

1. Household appliance (1) with at least one component (3) which is supplied with water during operation of the household appliance (1), wherein the household appliance (1) comprises a detection device (7) configured to detect a presence of limescale (18) on at least one surface (6) of the at least one component (3), wherein the detection device (7) comprises a first electrode (9) and a second electrode (10), which are applied to the at least one surface, a measuring unit (11) configured to measure a first electrical quantity of the electrodes (8) at at least one frequency of an alternating second electrical quantity applied to the electrodes (8), and an evaluation unit (12) configured to determine an impedance of the electrodes (8) based on the measured first electrical quantity and configured to deduce the presence of limescale (18) based on the determined impedance, **characterized in that** the first electrode (9) and the second electrode (10) each comprise a collector portion (14, 16) and a plurality of fingers (15, 17) extending from the collector portion (14, 16), wherein at least one finger (15) of the first electrode (9) is arranged adjacent to at least one finger (17) of the second electrode (10).

2. Household appliance (1) according to claim 1, **characterized in that** the detection device (7) comprises a frequency generator (13) configured to provide a plurality of frequencies of the alternating second electrical quantity.

3. Household appliance (1) according to claim 1 or 2, **characterized in that** the electrodes (8) are applied to the at least one surface (6) of the at least one component (3).

4. Household appliance (1) according to any one of claims 1 to 3, **characterized in that** the detection device (7) is configured to detect the presence of limescale (18) on at least one of the electrodes (8).

5. Household appliance (1) according to any one of claims 1 to 4, **characterized in that** the evaluation unit (12) is configured to deduce the presence of limescale (18) based on a recognition of a pattern of a plurality of values (26, 27) indicating the impedance of the electrodes (8) at one frequency.

6. Household appliance (1) according to any one of claims 1 to 5, **characterized in that** the evaluation unit (12) comprises a classifier (34) configured to distinguish between the presence of limescale (18) and an absence of limescale (18).

7. Household appliance (1) according to any one of claims 1 to 6, **characterized in that** the household appliance (1) comprises a warning device (45) configured to inform a user of the household appliance (1) about the presence of limescale (18) on the least one surface (6).

8. Household appliance (1) according to any one of claims 1 to 7, **characterized in that** the household appliance (1) comprises a descaling device (46) configured to perform a descaling process of the least one surface (6), in particular upon a signal from the detection device (7).

9. Household appliance (1) according to any one of claims 1 to 8, **characterized in that** the household appliance (1) is configured to heat the water being in contact with the least one component (3) during operation of the household appliance (1).

10. Household appliance (1) according to any one of claims 1 to 9, **characterized in that** the household appliance (1) is configured as a steam oven or a coffee machine or a washing machine or a dishwasher or a home grow device.

11. Method for operating a household appliance (1) comprising at least one component (3), which is supplied with water during operation of the household appliance (1), wherein the household appliance (1)
- detects a presence of limescale (18) on at least one surface (6) of the at least one component (3) using a detection device (7), wherein the detection device (7) comprises a first electrode (9) and a second electrode (10), which are applied to the at least one surface;
- measures a first electrical quantity of the electrodes (8) at at least one frequency of an alternating second electrical quantity applied to the electrodes (8) using a measuring unit (11); and
- determines an impedance of the electrodes (8) based on the measured first electrical quantity and deducing the presence of limescale (18) based on the determined impedance using an evaluation unit (12);
**characterized in that**
in the step of detecting a presence of limescale, a detection device (7) is used, whose first electrode (9) and second electrode (10) each comprise a collector portion (14, 16) and a plurality of fingers (15, 17) extending from the collector portion (14, 16), wherein at least one finger (15) of the first electrode (9) is arranged adjacent to at least one finger (17) of the second electrode (10).

## Patentansprüche

1. Haushaltsgerät (1) mit mindestens einer Komponente (3), die im Betrieb des Haushaltsgeräts (1) mit Wasser versorgt wird, wobei das Haushaltsgerät (1) eine Erkennungsvorrichtung (7) umfasst, die so ausgelegt ist, dass sie ein Vorhandensein von Kalkablagerungen (18) an mindestens einer Oberfläche (6) der mindestens einen Komponente (3) erkennt, wobei die Erkennungsvorrichtung (7) eine erste Elektrode (9) und eine zweite Elektrode (10), die an der mindestens einen Oberfläche anliegen, eine Messeinheit (11), die so ausgelegt ist, dass sie eine erste elektrische Größe der Elektroden (8) bei mindestens einer Frequenz einer an den Elektroden (8) anliegenden zweiten elektrischen Wechselgröße misst, und eine Auswerteeinheit (12) umfasst, die so ausgelegt ist, dass sie auf der Grundlage der ersten elektrischen Messgröße eine Impedanz der Elektroden (8) ermittelt und auf der Grundlage der ermittelten Impedanz ableitet, dass Kalkablagerungen (18) vorhanden sind,
**dadurch gekennzeichnet, dass** die erste Elektrode (9) und die zweite Elektrode (10) jeweils einen Kollektorabschnitt (14, 16) und mehrere Finger (15, 17) umfasst, die von dem Kollektorabschnitt (14, 16) ausgehen, wobei zumindest ein Finger (15) der ersten Elektrode (9) neben mindestens einem Finger (17) der zweiten Elektrode (10) angeordnet ist.

2. Haushaltsgerät (1) nach Anspruch 1, **dadurch gekennzeichnet, dass** die Erkennungsvorrichtung (7) einen Frequenzgenerator (13) umfasst, der so ausgelegt ist, dass er mehrere Frequenzen der zweiten elektrischen Wechselgröße bereitstellt.

3. Haushaltsgerät (1) nach Anspruch 1 oder 2, **dadurch gekennzeichnet, dass** die Elektroden (8) an die mindestens eine Oberfläche (6) der mindestens einen Komponente (3) angelegt sind.

4. Haushaltsgerät (1) nach einem der Ansprüche 1 bis 3, **dadurch gekennzeichnet, dass** die Erkennungsvorrichtung (7) so ausgelegt ist, dass sie vorhandene Kalkablagerungen (18) an mindestens einer der Elektroden (8) erkennt.

5. Haushaltsgerät (1) nach einem der Ansprüche 1 bis 4, **dadurch gekennzeichnet, dass** die Auswerteeinheit (12) so ausgelegt ist, dass sie auf der Grundlage einer Erkennung eines Musters von mehreren Werten (26, 27), die die Impedanz der Elektroden (8) bei einer Frequenz angeben, auf das Vorhandensein von Kalkablagerungen (18) schließt.

6. Haushaltsgerät (1) nach einem der Ansprüche 1 bis 5, **dadurch gekennzeichnet, dass** die Auswerteeinheit (12) einen Klassifikator (34) umfasst, der so ausgelegt ist, dass er zwischen dem Vorhandensein und einem Fehlen von Kalkablagerungen (18) unterscheidet.

7. Haushaltsgerät (1) nach einem der Ansprüche 1 bis 6, **dadurch gekennzeichnet, dass** das Haushaltsgerät (1) eine Warnvorrichtung (45) umfasst, die so ausgelegt ist, dass sie einen Benutzer des Haushaltsgeräts (1) über das Vorhandensein von Kalkablagerungen (18) an der mindestens einen Oberfläche (6) informiert.

8. Haushaltsgerät (1) nach einem der Ansprüche 1 bis 7, **dadurch gekennzeichnet, dass** das Haushaltsgerät (1) eine Entkalkungsvorrichtung (46) umfasst, die so ausgelegt ist, dass sie insbesondere auf ein Signal aus der Erkennungsvorrichtung (7) hin an der mindestens einen Oberfläche (6) einen Entkalkungsprozess durchführt.

9. Haushaltsgerät (1) nach einem der Ansprüche 1 bis 8, **dadurch gekennzeichnet, dass** das Haushaltsgerät (1) so ausgelegt ist, dass es das Wasser erhitzt, das im Betrieb des Haushaltsgeräts (1) mit der mindestens einen Komponente (3) in Kontakt kommt.

10. Haushaltsgerät (1) nach einem der Ansprüche 1 bis 9, **dadurch gekennzeichnet, dass** das Haushaltsgerät (1) als Dampfgarer oder als Kaffeemaschine oder als Waschmaschine oder als Geschirrspüler oder als Eigenanbauvorrichtung ausgelegt ist.

11. Verfahren zum Betreiben eines Haushaltsgeräts (1) mit mindestens einer Komponente (3), die im Betrieb des Haushaltsgeräts (1) mit Wasser versorgt wird, wobei das Haushaltsgerät (1)
- an mindestens einer Oberfläche (6) der mindestens einen Komponente (3) mithilfe einer Erkennungsvorrichtung (7) vorhandene Kalkablagerungen erkennt, wobei die Erkennungsvorrichtung (7) eine erste Elektrode (9) und eine zweite Elektrode (10) umfasst, die an die mindestens eine Oberfläche angelegt werden,
- mithilfe einer Messeinheit (11) eine erste elektrische Größe der Elektroden (8) bei mindestens einer Frequenz einer zweiten elektrischen Wechselgröße misst, die an den Elektroden (8) anliegt, und
- auf der Grundlage der gemessenen ersten elektrischen Größe eine Impedanz der Elektroden (8) ermittelt und auf der Grundlage der ermittelten Impedanz mithilfe einer Auswerteeinheit (12) auf das Vorhandensein von Kalkablagerungen (18) schließt, **dadurch gekennzeichnet, dass**
beim Erkennen eines Vorhandenseins von Kalkablagerungen eine Erkennungsvorrichtung (7) benutzt wird, deren erste Elektrode (9) und zweite Elektrode (10) jeweils einen Kollektorabschnitt (14, 16) und mehrere von dem Kollektorabschnitt (14, 16) ausgehende Finger (15, 17) umfassen, wobei mindestens ein Finger (15) der ersten Elektrode (9) neben mindestens einem Finger (17) der zweiten Elektrode (10) angeordnet ist.

## Revendications

1. Appareil électroménager (1) comprenant au moins un composant (3) qui est alimenté avec de l'eau durant le fonctionnement de l'appareil électroménager (1), dans lequel l'appareil électroménager (1) comprend un dispositif de détection (7) configuré pour détecter la présence de tartre (18) sur au moins une surface (6) de l'au moins un composant (3),
dans lequel le dispositif de détection (7) comprend une première électrode (9) et une deuxième électrode (10), qui sont appliquées sur l'au moins une surface, une unité de mesure (11) configurée pour mesurer une première quantité électrique des électrodes (8) à au moins une fréquence d'une deuxième quantité électrique alternative appliquée sur les électrodes (8), et une unité d'évaluation (12) configurée pour déterminer une impédance des électrodes (8) sur la base de la première quantité électrique mesurée et configurée pour déduire la présence de tartre (18) sur la base de l'impédance déterminée,
**caractérisé en ce que** la première électrode (9) et la deuxième électrode (10) comprennent chacune une partie de collecteur (14, 16) et une pluralité de tiges (15, 17) s'étendant à partir de la partie de collecteur (14, 16), dans lequel au moins une tige (15) de la première électrode (9) est disposée de façon adjacente à au moins une tige (17) de la deuxième électrode (10).

2. Appareil électroménager (1) selon la revendication 1, **caractérisé en ce que** le dispositif de détection (7) comprend un générateur de fréquence (13) configuré pour fournir une pluralité de fréquences de la deuxième quantité électrique alternative.

3. Appareil électroménager (1) selon la revendication 1 ou 2, **caractérisé en ce que** les électrodes (8) sont appliquées sur l'au moins une surface (6) de l'au moins un composant (3).

4. Appareil électroménager (1) selon l'une quelconque des revendications 1 à 3, **caractérisé en ce que** le dispositif de détection (7) est configuré pour détecter la présence de tartre (18) sur au moins une des électrodes.

5. Appareil électroménager (1) selon l'une quelconque des revendications 1 à 4, **caractérisé en ce que** l'unité d'évaluation (12) est configurée pour déduire la présence de tartre (18) sur la base d'une reconnaissance d'un profil d'une pluralité de valeurs (26, 27) indiquant l'impédance des électrodes (8) à une fréquence.

6. Appareil électroménager (1) selon l'une quelconque des revendications 1 à 5, **caractérisé en ce que** l'unité d'évaluation (12) comprend un classificateur (34) configuré pour distinguer entre la présence de tartre (18) et l'absence de tartre (18).

7. Appareil électroménager (1) selon l'une quelconque des revendications 1 à 6, **caractérisé en ce que** l'appareil électroménager (1) comprend un dispositif d'avertissement (45) configuré pour informer un utilisateur de l'appareil électroménager (1) sur la présence de tartre (18) sur l'au moins une surface (6).

8. Appareil électroménager (1) selon l'une quelconque des revendications 1 à 7, **caractérisé en ce que** l'appareil électroménager (1) comprend un dispositif de détartrage (46) configuré pour exécuter un processus de détartrage sur l'au moins une surface (5), en particulier en réponse à un signal provenant du dispositif de détection (7).

9. Appareil électroménager (1) selon l'une quelconque des revendications 1 à 8, **caractérisé en ce que** l'appareil électroménager (1) est configuré pour chauffer de l'eau qui est en contact avec l'au moins un composant (3) pendant le fonctionnement de l'appareil électroménager (1).

10. Appareil électroménager (1) selon l'une quelconque des revendications 1 à 9, **caractérisé en ce que** l'appareil électroménager (1) est configuré sous forme d'un four à vapeur ou d'une machine à café ou d'un lave-linge ou d'un lave-vaisselle ou d'un dispositif de culture domestique.

11. Procédé de fonctionnement d'un appareil électroménager (1) comprenant au moins un composant (3), qui est alimenté avec de l'eau durant le fonctionnement de l'appareil électroménager (1), dans lequel l'appareil électroménager (1)
- détecte la présence de tartre (18) sur au moins une surface (6) de l'au moins un composant (3) au moyen d'un dispositif de détection (7), dans lequel le dispositif de détection (7) comprend une première électrode (9) et une deuxième électrode (10), qui sont appliquées sur l'au moins une surface,
- mesure une première quantité électrique des électrodes (8) à au moins une fréquence d'une deuxième quantité électrique alternative appliquée sur les électrodes (8), au moyen d'une unité de mesure (11), et
- détermine une impédance des électrodes (8) sur la base de la première quantité électrique mesurée et déduit la présence de tartre (18) sur la base de l'impédance déterminée en se servant d'une unité d'évaluation (12),
**caractérisé en ce que**
dans l'étape de détection d'une présence de tartre, un dispositif de détection (7) est utilisé, dont une première électrode (9) et une deuxième électrode (10) comprennent chacune une partie de collecteur (14, 16) et une pluralité de tiges (15, 17) s'étendant à partir de la partie de collecteur (14, 16), dans lequel au moins une tige (15) de la première électrode (9) est disposée de façon adjacente à au moins une tige (17) de la deuxième électrode (10).
